(19) Europäisches Patentamt
European Patent Office
Office européen des brevets

(11) **EP 3 745 223 B1**

(12) **EUROPEAN PATENT SPECIFICATION**

(45) Date of publication and mention
of the grant of the patent:
**15.03.2023  Bulletin 2023/11**

(21) Application number: **18714005.8**

(22) Date of filing: **22.01.2018**

(51) International Patent Classification (IPC):
**G05B 19/401** *(2006.01)*

(52) Cooperative Patent Classification (CPC):
**G05B 19/401;** G05B 2219/37027;
G05B 2219/37275

(86) International application number:
**PCT/ES2018/070048**

(87) International publication number:
**WO 2019/141884 (25.07.2019 Gazette 2019/30)**

(54) **METHOD FOR SELF-VERIFICATION OF MECHATRONIC SYSTEMS**

VERFAHREN ZUR SELBSTÜBERPRÜFUNG MECHATRONISCHER SYSTEME

PROCÉDÉ DE VÉRIFICATION AUTOMATIQUE DE SYSTÈMES MÉCATRONIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.12.2020  Bulletin 2020/49**

(73) Proprietor: **Fundación Tekniker**
**20600 Eibar (Guipuzkoa) (ES)**

(72) Inventors:
• **MUTILBA LARREA, Unai**
**20600 Eibar (ES)**

• **GOMEZ-ACEDO BILBAO, Eneko**
**20600 Eibar (ES)**
• **OLARRA URBERUAGA, Aitor**
**20600 Eibar (ES)**
• **KORTABERRIA BERRIOZABAL, Gorka**
**20600 Eibar (ES)**

(74) Representative: **Balder IP Law, S.L.**
**Paseo de la Castellana 93**
**5ª planta**
**28046 Madrid (ES)**

(56) References cited:
**US-A1- 2011 292 404     US-A1- 2014 355 002
US-A1- 2017 010 094**

EP 3 745 223 B1

**Description**

**TECHNICAL FIELD**

The present invention relates to the field of measurement/verification of mechanical systems, such as industrial machines either for production or for manipulation purposes where accuracy is a requirement. More particularly, it refers to methods and systems for accurately measuring the volumetric positioning performance of mechatronic systems.

**STATE OF THE ART**

Currently, there are different technologies and measurement methods to characterize the geometrical errors of a mechatronic system. These methods can be divided into direct and indirect methods. While direct methods allow the measurement of mechanical errors for a single machine axis without the involvement of other axis, indirect measurements require the movement of multi-axes of the machine under characterization.

As stated by Uriarte L. et al. (Machine tools for large parts. CIRP Ann. - Manuf. Technol. 2013, 62, 731-750), direct measurement methods allow to separately measure a component of error regardless of the kinematic model of the machine and the motion of the other axes. Direct measurement can be classified into three different groups according to their measurement principle (Mutilba, U. et al., Traceability of On-Machine Tool Measurement: A Review. MDPI Sensors 2017, 17, 40): (a) Standard-based methods, such as straight edges, linear scales, step gauges or orthogonal standards. (b) Laser-based methods or multidimensional devices, such as interferometers or telescope bars. They are usually applied to measure the machine positioning properties, because of the suitability of the laser wavelength for long length measurements, due to its long-coherence length. For example, a laser interferometer, with different optics configurations, allows detecting position, geometrical and form errors. And (c) Gravity-based methods that use the direction of the gravity vector as a metrological reference, such as levels.

For example, US8659763B2 discloses a method and system for machine and part measurement on a numerical control (NC) processing machine. The processing machine has a machine head with an associated mechanical and electrical spindle changing interface for holding a motor spindle, so the spindle changing interface can be replaced with a laser interferometer. A plurality of reflectors is disposed on different locations of the machine to allow the interferometric measurement of the light beam provided by the laser interferometer. This way, linear measurements, either parallel to the axis of motion or space diagonals, are executed to determine machine geometric errors.

However, traditional direct methods are very time-consuming and have strong limitations regarding the volumetric performance assessment of large mechatronic systems. In fact, for volumetric error measurement, the efficiency of direct measurement can be a critical issue. In that sense, indirect methods have the advantage of offering the possibility of fast and reliable volumetric error mapping. Besides, they are less time-consuming than direct measurement.

Indirect methods enable global correction of errors and require less time than direct measurement. They are based on the multi-axis movement of the mechatronic system under test. Nowadays, there are different procedures and technologies for indirect characterization of linear axis, such as circular test, step diagonal test, measurement of artifact and passive links, among others. For example, DE10126753 A1 discloses a method for increasing the measurement accuracy of coordinate measuring machines and machine tools, in which a pivotable laser interferometer is mounted and fixed on the machine table. This interferometer automatically follows a triple mirror or a so-called "cat's eye", which is located in the vicinity of the touch probe and distance measurement is done from the interferometric measuring system to the "cat's eye". This way, multiple measurements are done and processed mathematically for improved measuring point's determination. DE19947374B4 discloses a trilateration approach that uses three laser trackers and a reflector attached to the movable spindle of a machine tool. A similar approach is disclosed in EP1658471B1, based on a kinematic model of the measured multi-body system. Therefore, among the different available techniques for indirect measurement, multilateration-based approaches are commonly accepted as the most accurate solutions for verification of volumetric performance in medium and large mechatronic systems, as reported for example by Schwenke, H. et al. (On-the-fly calibration of linear and rotary axes of machine tools and CMMs using a tracking interferometer. CIRP Ann. - Manuf. Technol. 2009, 58, 477-480) or by Schwenke, H. et al. (Error mapping of CMMs and machine tools by a single tracking interferometer. CIRP Ann. - Manuf. Technol. 2005, 54, 475-478).

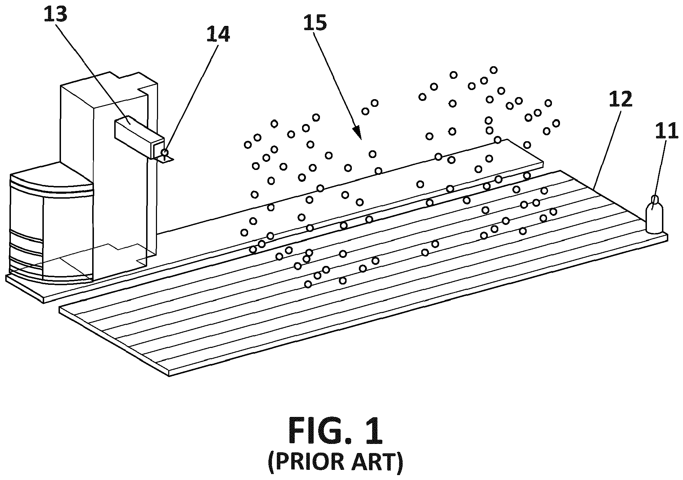

For a typical multilateration-based approach, at least four measuring systems are needed for a complete volumetric verification, usually disposed on each machine tool table corner and fixed to it. However, commonly only one measuring device is available, so in practice, multilateration measurements are done in a sequential scheme, as follows: machine movements are repeated several times and measurements are taken from different positions, typically from each machine tool table corner, to which the measuring system is sequentially moved. If, on the contrary, four measuring devices were available at the same time (which is unusual for cost reasons, among others), simultaneous multilateration would reduce some of the limitations of sequential multilateration, such as total time consumption, machine tool (MT) repeatability requirement and MT drift due to thermal variation during the measuring process, as reported by Mutilba, U. et al. (Traceability of On-Machine Tool Measurement: A Review. MDPI Sensors 2017, 17, 40). Figure 1 shows a conventional deployment for machine tool calibration using a multilateration based scheme, in which a tracking interferometer 11 is fixed to the table 12 and a reflector 14 is fixed to the system spindle 13. The MT or coordinate measuring machine (CMM) describes a volumetric path through a volumetric point cloud 15 and a distance measurement is taken between the tracking interferometer 11 and the reflector 14. The process is repeated at least four times for different positions of the tracking interferometer 11, which is usually placed at different corners of the system. Regarding the tracking devices currently used for medium and large scale metrology in multilateration based approaches, three types of tracking devices are mainly employed: (a) Tracking interferometers based on optimized laser trackers, as reported by Schwenke H. et al. (Error mapping of CMMs and machine tools by a single tracking interferometer. CIRP Ann. - Manuf. Technol. 2005, 54, 475-478). (b) Absolute Distance Meter (ADM)-based laser trackers, such as the one marketed by Hexagon Manufacturing Intelligence (http://www.hexagonmi.com/products/laser-tracker-systems/leica-absolute-tracker-at930 (accessed on 30 November 2017) (c) Absolute interferometer (AIFM)-based laser tracker, such as the one marketed by Hexagon Manufacturing Intelligence (http://www.hexagonmi.com/products/laser-tracker-systems/leica-absolute-tracker-at930 (accessed on 30 November 2017).

In this context, different solutions based on combining tracking interferometers and multilateration approach have been developed for geometric characterization of large mechatronic systems in which the volumetric performance of the system is of special interest. For example, Olarra et al. (Measuring positioning accuracy of large machine tools; 2012) showed an intermediate approach where linear components of error are measured with a laser tracker based on sequential multilateration. Hence, by combining the data coming from different measurement systems, multilateration is applied to measure 3D positions. This approach is similar to the approach described at ISO 10360-2 standard (ISO 230-2: *Test code for machine tools - Part 2: Determination of accuracy and repeatability of positioning of numerically controlled* axes; 2014), in which a calibrated artefact is employed for volumetric error determination. Another example of sequential multilateration is described by Schwenke et al. (On-the-fly calibration of linear and rotary axes of machine tools and CMMs using a tracking interferometer. CIRP Ann. - Manuf. Technol. 2009, 58, 477-480). US20140355002A1 discloses a method for measuring errors in the linear feed shafts of a multi-spindle machine tool using a laser length measuring device and several reflector mirrors attached to a table of the machine tool.

In sum, current multilateration methods use a reflector attached to the mechatronic system spindle and at least four tracking interferometers fixed to the mechatronic system base. Besides, the requirement of at least four measuring devices in multilateration schemes has led to a sequential approach, which does not allow performing an automatic verification process. This approach has two main limitations:

- Tracking interferometers are manually fixed to the mechatronic system base, so automatic verification process is not allowed. In addition, tracking interferometers cannot remain permanently on the mechatronic system base, so they are mounted and demounted for every measurement.
- Sequential scheme requires moving at least four times the mechatronic system to every measuring position. The measuring process consequently takes more time. Therefore, measuring cost increases. Besides, measurement uncertainty also increases because MT thermal drift occurs.

## DESCRIPTION OF THE INVENTION

The method and system described in the present disclosure intend to solve the shortcomings of the prior art. In the present disclosure, the volumetric positioning of a mechatronic system is measured using: a measuring device attached to the mechatronic system, for example to an end effector thereof; at least four fiducial points -also referred to as reference points-disposed on different locations of the mechatronic system, preferably surrounding the volumetric work space of the mechatronic system; and a volumetric point cloud -also referred to as a grid of points- defined to depict the volumetric work space of the mechatronic system. The measuring method is based on the multi-axis movement of the mechatronic system, in particular, of its end effector, under test. The measuring device is preferably fixed to the end effector of the mechatronic system, near the tool centre point (TCP) of the end effector. The mechatronic system, and therefore the measuring device attached thereto, is sequentially moved to each point of the volumetric point cloud. At each position of the measuring device, that is to say, at each point of the volumetric point cloud, a distance measurement is taken only once from the measuring device to each fixed fiducial point. If there are, for example, M fiducial points (M>3), M distance measurements are taken at each point of the volumetric point cloud.

By combining the measurement data obtained from the single measuring device at different points of the volumetric point cloud to the at least four fixed fiducial points, multilateration is applied to measure 3D positions with enough accuracy. In order to do an accurate measurement, information is processed by means of a multilateration algorithm in order to obtain the spatial XYZ coordinates of the position of the measuring device. It should be remarked that orientations around XYZ axis can also be calculated by means of the same multilateration algorithm. Depending on the mechatronic system under measurement, the multilateration may be solved for XYZ coordinate measurement, which means that the multilateration is a 3 degrees of freedom (d.o.f) exercise, or the multilateration may be solved for XYZ coordinate and orientation measurement, which implies a 6 d.o.f exercise (for example: a machine tool (MT) verification requires 3D position measurement to understand its position accuracy in space; while a robot verification requires 3D position and orientation measurement to understand its positioning accuracy and pose). However, for simplicity purposes, hereinafter a 3 d.o.f measurement will be referred to. Once the measured coordinates are calculated, they are compared with nominal values and geometric errors of the mechatronic system are deduced from an analytical solution. The entire data acquisition process is done automatically, meaning that no human intervention is required during the acquisition stage. The method is also referred to as an integrated multilateration approach for self-verification/checking.

The mechatronic system can be, for example, a manufacturing system. The mechatronic system may be a machine tool (MT), a multi-body moving system, a robot or a coordinate measuring machine (CMM), among others. The method of the present disclosure is applicable to any mechatronic system capable of providing multi-axis movement, either describing a plane or a volumetric path, which requires volumetric verification or characterization. In particular, it is suitable for the calibration of working volumes bigger than 0.5 m$^3$. Depending on the type and characteristics of measuring device, the method of the present disclosure may be suitable for the calibration of working volumes up to 1.000 m$^3$.

In embodiments of the invention, the measuring device may be one of the following: a tracking interferometer, an absolute measurement system, such as a distance meter, also called distanciometer, or a portable coordinate measuring machine (CMM). It is remarked that the measuring device does not necessarily require tracking capacity. The measuring device is out of the scope of the present disclosure.

The end effector of the mechatronic system to which the measuring device is attached can be, for example, a spindle, in which case the measuring device is directly attached to the spindle of the manufacturing system, preferably near the tool centre point (TCP) of the spindle.

A first aspect of the invention refers to a method for determining the volumetric error of a mechatronic system according to claim 1.

In embodiments of the invention, for each of the N × M distance values D$_{ij}$, wherein 1 < i < N and 1 < j < M, the following equation is obtained:

$$\left(Dij + L_{offset}\right)^2 = \left(P_{ix} - T_{jx}\right)^2 + \left(P_{iy} - T_{jy}\right)^2 + \left(P_{iz} - T_{jz}\right)^2$$

wherein:

D$_{ij}$ is a distance measurement taken from point i of the point cloud to fiducial point j, L$_{offset}$ is an initial offset value, T$_j$ is the position of fixed fiducial point j, and
P$_i$ is the position of point i of the point cloud.

In embodiments of the invention, the measuring device is a tracking interferometer or an absolute measurement system. When the measuring system is an absolute measurement system, the value of L$_{offset}$ = 0.

In embodiments of the invention, the M fiducial points are fixed at corners of a base of the mechatronic system.

In embodiments of the invention, the mechatronic system performs multi-axis movement.

In embodiments of the invention, the mechatronic system is a machine tool or a robot.

In embodiments of the invention, in order to, from each position in the volumetric point cloud, acquire a distance value (D$_{ij}$) to each of the M fiducial points, the measuring device is sequentially oriented towards each fiducial point.

A second aspect of the invention refers to a system for determining the volumetric error of a mechatronic system according to claim 9.

In embodiments of the invention, the plurality of M fiducial points is fixed at corners of the base of the mechatronic system.

In embodiments of the invention, the mechatronic system is configured to perform multi-axis movement.

In embodiments of the invention, the measuring device is a tracking interferometer or an absolute measurement system.

In embodiments of the invention, the actuating means are comprised in the mechatronic system.

In embodiments of the invention, the mechatronic system is a machine tool or a robot.

Unlike prior art methods, which required that, for a similar measurement, the measuring device was moved several times to each measuring point, the method of the present disclosure requires that the measuring device, and therefore the mechatronic system to which it is attached, is moved just once to each measuring point. This leads to a reduction of total consumption time, which reduces the measurement uncertainty since thermal drift is avoided. In addition, the measuring process can be executed automatically because no human intervention is needed during the process.

Additional advantages and features of the invention will become apparent from the detail description that follows and will be particularly pointed out in the appended claims.

**BRIEF DESCRIPTION OF THE DRAWINGS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a conventional deployment for machine tool calibration using a multilateration based scheme.

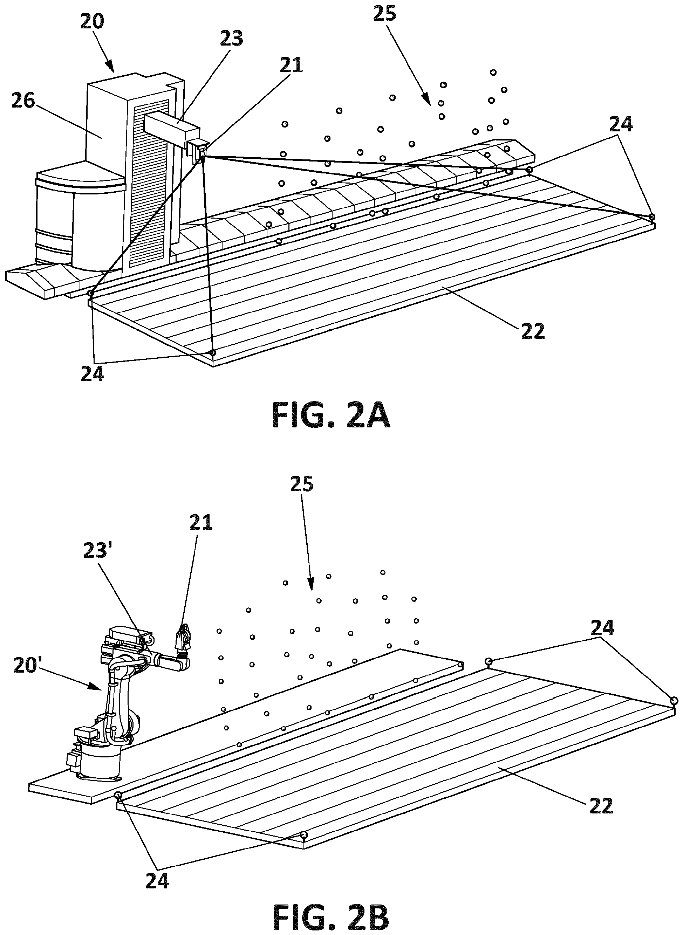

Figures 2A and 2B show respective deployments for measuring the volumetric positioning of a mechatronic system according to embodiments of the present invention. In figure 2A, the mechatronic system is a machine tool. A tracking interferometer is attached to the spindle of the machine tool. In figure 2B, the mechatronic system is a robot. A tracking interferometer is attached to the robotic arm of the robot. Four fiducial points are disposed surrounding the volumetric work space of the mechatronic system. A volumetric point cloud is defined to depict the volumetric work space of the mechatronic system.

Figure 3 shows a workflow of the method for determining the volumetric error of a mechatronic system according to embodiments of the present invention.

Figure 4 shows the uncertainty for the point cloud and figure 5 shows the uncertainty for the fixed fiducial points, obtained in an experiment.

**DESCRIPTION OF A WAY OF CARRYING OUT THE INVENTION**

Figures 2A and 2B show application examples of the method of the invention, where a measurement method is implemented to characterize the geometric errors of a mechatronic system, according to embodiments of the invention. In other words, the method determines the volumetric positioning of the mechatronic system under consideration integrating an additional measuring system attached to the mechatronic system itself. In figure 2A, a simplified representation of a mechatronic system 20, in particular a machine tool, is shown. More specifically, an element 26 of the machine tool is shown, to which an end effector 23 of the machine tool is attached. The end effector 23 may be, for example, a spindle or a mechatronic structure where the additional measuring system can be attached an integrated. Also, a table or base 22 of the machine tool 20, typically occupied by the piece or part to be machined by the machine tool 20, is shown.

In the embodiment shown in figure 2A, a tracking interferometer 21 is attached to the end effector 23 (e.g. spindle) of the machine tool 20 and four fiducial points (for example, reflectors) 24 are fixed to respective corners of the base 22 of the machine tool. The grid of points 25 represents the volumetric path of the tracking interferometer 21. In other words, the volumetric point cloud 25 represents the points to which the tracking interferometer 21 is sequentially moved in order to acquire distance measurements to the four reflectors 24. The four reflectors 24 are therefore located outside the volume defined by the point cloud 25. Assuming that the grid of points 25 is formed by N points, N being a natural number, the tracking interferometer 21 is moved N times, once to each of these N points. The tracking interferometer 21 is preferably fixed near the tool centre point (TCP) of the spindle 23. The method is based on the multi-axis movement of the mechatronic system 20 under test. It is remarkable that the tracking interferometer 21 has 3 degrees of freedom, so it can do the tracking and pointing job to reflectors 24 dynamically, without human intervention. In other words, once the machine tool 20 (and therefore the tracking interferometer 21 attached thereto) is placed at each point N, the tracking interferometer 21 is sequentially oriented towards each of the M fiducial points and, at each orientation, measures the distance between the point (N) and the fiducial point (M). It means that no special requirement regarding degrees of freedom is required on the mechatronic system 20 side to attach the additional system 21. A mechatronic interface for the attachment of the tracking interferometer 21 to the end effector 23 may be required. The application of the shown measuring deployment is not limited to machine tools. Rather, any mechatronic system, such as a robot or a coordinate measuring machine, could be measured instead.

Figure 2B shows another mechatronic system 20', in particular a robot, which can be measured using a similar deployment. In this case, the measuring system (tracking interferometer 21) is attached to the free end of the robotic arm 23'. Like in figure 2A, a table or base 22 is shown, typically occupied by the piece or part to be operated by the robot 20', and four fiducial points (por ejemplo reflectors) 24 are fixed to respective corners of the base 22. The shown grid of points 25 represents the volumetric path of the tracking interferometer 21, that is to say, the points to which the tracking interferometer 21 is sequentially moved in order to acquire distance measurements to the four reflectors 24. The four reflectors 24 are therefore located outside the volume defined by the point cloud 25. Using the same terminology as before, assuming that the grid of points 25 is formed by N points, the tracking interferometer 21 is moved N times, once to each of these N points. The tracking interferometer 21 is preferably fixed near the tool centre point (TCP) of the robotic arm 23'.. Like in figure 2A, the tracking and pointing task performed by the tracking interferometer 21 is done dynamically, without human intervention.

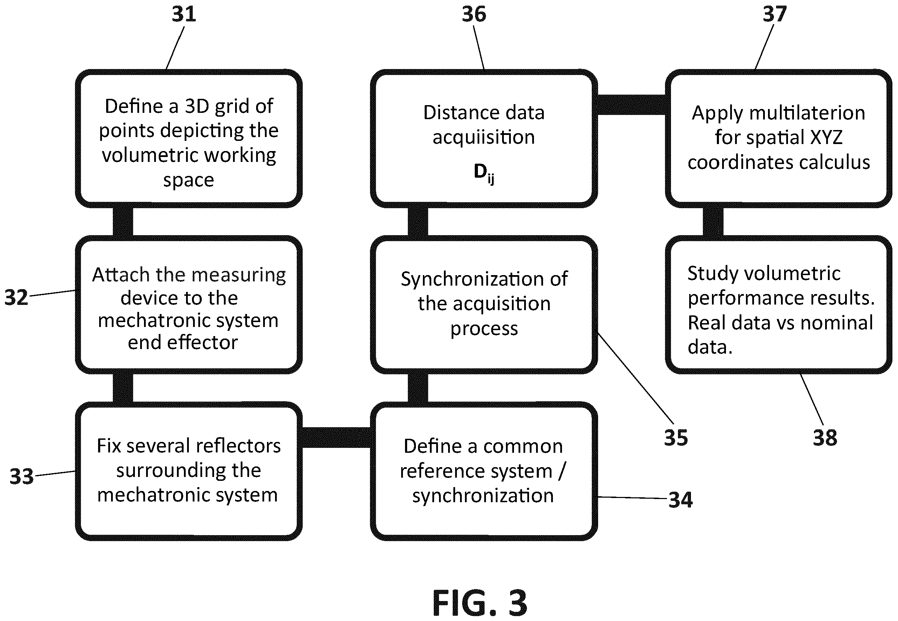

The method for measuring the volumetric positioning of the mechatronic system 20, 20' by applying an integrated multilateration approach is described next with reference to the workflow of figure 3. Depending on the characteristics of the measuring device 21 (which has been implemented with a tracking interferometer in figures 2A-2B), the method can measure volumes bigger than 0.5 m$^3$ to working volumes up to 1.000 m$^3$. A skilled person in the art will understand that the development of technology may permit the measurement of even larger volumes.

First, a volumetric point cloud 25 is defined to depict the volumetric work space of the mechatronic system 20, 20'. This is represented in box 31 of figure 3. The number N of points defining the 3D point cloud 25 may depend on the size of the volume to be measured and may be selected in agreement between the user and the measurement operator in each case. Thus, in embodiments of the invention, the distance between adjacent points in the 3D point cloud 25 may vary depending on the size of the volume to be measured, in order not to exceed a certain threshold of total points in order to limit the amount of time dedicated to the measurements (acquisition stage). For example, it may be imposed that $N \leq 2000$, such as $N \leq 1000$, or $N \leq 500$, or $N \leq 300$, or $N \leq 200$, or $N \leq 100$, or $N \leq 50$. One skilled in the art will understand that the number N of points may be larger, than 2000 for example if the computational means for acquiring data have enough capacity to acquire data in a reasonable time, for example within one hour. For example, if the volume to be measured varies between 0.5 m$^3$ and 3 m$^3$, the distance between adjacent points may vary between 50 and 200 mm (1 mm = 10$^{-3}$ m), such as a distance of about 100 mm for a volume of approximately 1 m$^3$. In another example, if the volume to be measured varies between 3 m$^3$ and 7 m$^3$, the distance between adjacent points may vary between 180 and 300 mm, said distance being for example of 200 mm. In another example, if the volume to be measured is larger than 7 m$^3$, for example between 7 m$^3$ and 20 m$^3$, the distance between adjacent points may vary between 300 and 800 mm, said distance being for example of 500 mm. Regarding the shape of the point cloud 25, any shape may be envisaged. In embodiments of the invention, the point cloud 25 may be described as a polyhedron of six quadrilateral faces, such as a rectangular cuboid or a cube.

Next, a measuring device 21 is attached to the end effector 23 of the mechatronic system 20 (figure 2A) or to the robotic arm 23' of the mechatronic system 20' (figure 2B), preferably fixed near the tool centre point (TCP) of the end effector or robotic arm, as represented in box 32 of figure 3. Also, at least 4 reflectors 24 (4 reflectors in figures 2A-2B) are disposed (box 33) surrounding the mechatronic system 20, 20', for example at corners of the base 22, and therefore on a same plane, in such a way that the virtual volume defined by the vertical projection of said base 22 is larger than the volume defined by the point cloud 25. In other words, the virtual volume defined by the vertical projection of the base 22 contains the 3D point cloud 25. Alternatively, one of the reflectors 24 may be disposed outside the plane delimited by the base 22. The attachment of the measuring device 21 and/or the attachment of the reflectors 24 can be done prior to defining the volumetric point cloud 25.

Then, as shown in box 34 of figure 3, a common reference system is defined for the mechatronic system 20, 20', the measuring device 21 mounted on it and the fixed fiducial points (reflectors) 24. This stage 34 can be seen as performing a calibration of the measuring scenario, in which the problem of how to point from each position (N positions) reached by the measuring device 21 to each fiducial point 24 is solved. This may be done using the nominal point cloud data or optionally using a second 3D measuring device (not shown in figures 2A-2B), such as a second tracking interferometer or the integrated one 21 prior to its attachment to the mechatronic system 20, 20', used from outside of the mechatronic system 20, 20' and aligned with the integrated measuring system 21 to calibrate the measuring scenario. Thus, a common reference system is defined for the mechatronic system 20, 20', the measuring device 21 mounted on it and the plurality of fixed fiducial points (reflectors) 24. The establishment of a common reference system permits to synchronize (box 35) the movement of the mechatronic system 20, 20' and the data acquisition process. This makes the acquisition process (described next) automatic, meaning that no human trigger is required during the acquisition stage.

Next, the acquisition of data is performed, as represented in box 36 of figure 3. As mentioned, the data acquisition process is preferably synchronized (box 35) with the movement of the mechatronic system 20, 20', in such a way that no human intervention, such as triggering the process, is required during the acquisition process. Non-limiting ways of synchronizing the data acquisition process and the movement of the mechatronic system are using a time stamp, a clock signal or any other trigger information.

In order to measure the volumetric performance of the mechatronic system 20, 20', or more precisely, to determine the volumetric error of the mechatronic system 20, 20', the measuring device 21 is moved to each of the N points forming the point cloud 25. The goal of the method is then to determine where the mechatronic system 20, 20' (or rather, its end effector 23 or robotic arm 23') has actually stopped, in comparison to its ideal/ nominal destination (the respective points of the point cloud 25). Once the actual location of the mechatronic system is known, it is possible to calculate the deviation with respect to the ideal location and therefore to compensate, adjust or calibrate the mechatronic system. The method of the present disclosure calculates such deviation following the equation:

$$Deviation = Actual - nominal$$

The data acquisition process (box 36) is as follows: The mechatronic system 20, 20' is moved to each point of the 3D grid of points 25, in such a way that the measuring device 21 is sequentially brought to each of the N points of the point cloud 25. At each position of the measuring device 21, a linear distance is measured from the measuring device 21 to each fiducial point 24. No angular measurement is taken. In other words, if there are M fiducial points 24, M > 3, for each of the N positions reached by the measuring device 21, M measurements of linear distance are taken. If M = 4, 4 measurements are taken from each point of the point cloud 25. The entire point cloud 25 is measured automatically. A set of N × M linear measurements is obtained (a set of distances $D_{ij}$, wherein 1 < i < N and 1 < j < M). Each distance $D_{ij}$ represents a value or magnitude between the measuring device 21 at point i and fiducial point 24 j.

Next, the actual coordinates (XYZ) of each of the N actual locations of the measuring device 21 need to be calculated. This is done as follows, from the N × M linear measurements ($D_{ij}$) and applying a multilateration approach.

A multilateration based approach (box 37 of figure 3) is employed to process the acquired data and obtain the spatial XYZ coordinates (3D positioning) of each point comprising the point cloud 25. In other words, the multilateration based approach permits to obtain 3D information for space positioning of each point N comprised in the point cloud 25. The result of the multilateration is a set of N spatial (XYZ) coordinates representing the actual (real) volumetric positioning of the mechatronic system 20, 20'. After that, the obtained real data (actual data) are compared to nominal data in order to determine the volumetric error of the mechatronic system 20, 20'.

The multilateration approach makes use of the distance measurements $D_{ij}$ previously obtained in order to determine the 3D position of each point. Each measuring point forming the point cloud 25 has three unknown values (XYZ) and a unique known value (the measured distance value). This is the reason why the measuring process (acquisition process) is repeated at least four times from respective fixed external points 24. In addition, each fixed external point 24 adds three unknown values (XYZ) because their actual 3D positions are also unknown. If the measuring system 21 employs interferometry an additional unknown value shall be considered due to the initial offset of any interferometer system. However, if an absolute measurement system is employed, the offset is not considered since absolute values are acquired.

As already mentioned, the multilateration may be solved not only for XYZ coordinate measurement (3 degrees of freedom), as is the case for example of a machine tool, but also for XYZ coordinate and orientation measurement (6 d.o.f.), as is the case for example of a robot.

This way, for each of the N points forming the point cloud 25 and for each of the M fiducial points 24, the following general equation is obtained:

$$\left(Dij + L_{offset}\right)^2 = \left(P_{ix} - T_{jx}\right)^2 + \left(P_{iy} - T_{jy}\right)^2 + \left(P_{iz} - T_{jz}\right)^2$$

wherein:

$D_{ij}$ is a distance measurement taken from point i of the point cloud to fiducial point j, and there are therefore N × M distance measurements because N is the number of points in the cloud 25, 1 < i < N, and M is the number of fiducial points 24, 1 < j < M,

$L_{offset}$ is an initial offset value for any interferometry based measured, since interferometers measure relative values. If an absolute measurement system is used, $L_{offset}$ = 0.

$T_j$ is the position of fixed fiducial point j, 1 < j < M, and

$P_i$ is the position of point i of the point cloud, 1 < i < N.

The system to be solved is an overdetermined system of equations, so the result is mathematically minimized. The volumetric error of the mechatronic system 20, 20' is thus determined (box 38 of figure 3) by obtaining the real spatial data versus the nominal ones.

A skilled person in the art will understand that, unlike in conventional solutions based on combining tracking interferometers and multilateration approach for geometric characterization of large mechatronic systems, in the presented invention the tracking capacity of the absolute or relative distance measurement is not needed for the measurement execution. As described in Figure 3, in the current invention the measurement sequence is different from the traditional multilateration sequence, in which tracking capacity to track the reflector (attached to the spindle) movement on the measuring volume was required. In the current invention, instead of a tracking device, an absolute or relative distance measurement device may be used, aided for example by computer numerical control (CNC) system. A CNC-based distance measuring system is simpler than a tracking interferometer system, either laser tracker or laser tracer, which already include CNC option.

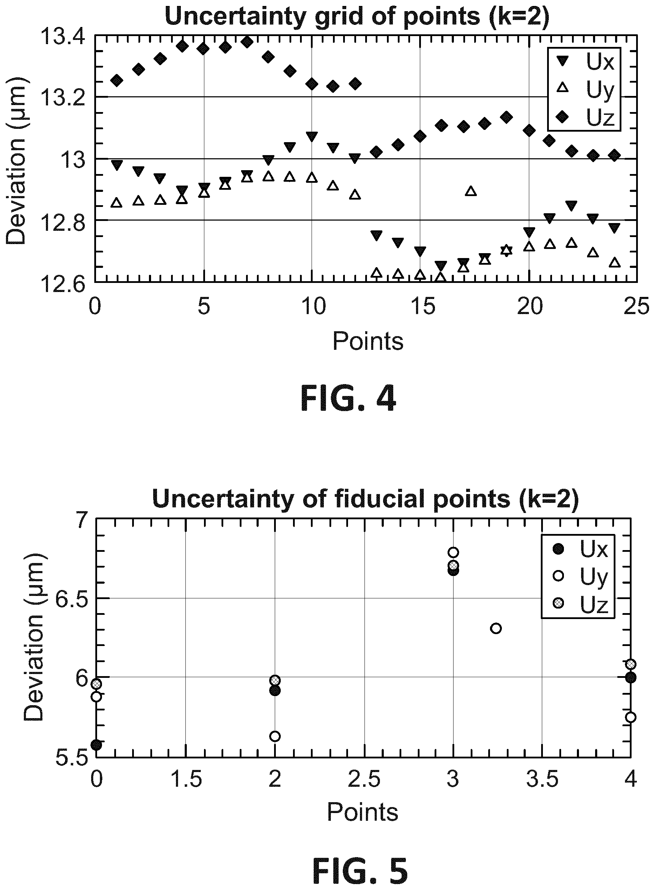

Next, an experiment is disclosed. An absolute LEICA AT402 tracking interferometer has been attached to an industrial robot KUKA KR60 in a scenario like the one shown in figure 2B. N=24 points have been defined as the volumetric point cloud to be measured. M=4 fiducial points have been defined surrounding the robot. A second laser tracker has been employed to define a common reference system for the mechatronic system 20' (industrial robot), the absolute tracking interferometer mounted on it and the fixed fiducial points (reflectors). The method of the invention has been performed, in such a way that the industrial robot is sequentially moved to each of the 24 points and, once at each point, the absolute tracking interferometer has been oriented towards each of the 4 fiducial points. For each of the N positions, data acquisition has been performed at each orientation (that is to say, 4 times per position). Complete data acquisition (4x24= 96 measurements) takes 8 minutes. To validate the process, uncertainty analysis has been done through a monte-carlo simulation and employing absolute tracking interferometer error model (8 microns as fixed length uncertainty). Figure 4 shows uncertainty for the point cloud and figure 5 shows uncertainty for the fixed fiducial points. Uncertainties are expressed for a coverage factor (k=2). Both figures show uncertainties for X, Y and Z direction as Ux, Uy and Uz, respectively.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1.  A method for determining the volumetric error of a mechatronic system (20, 20'), comprising:

    defining (31) a volumetric point cloud (25) depicting the volumetric work-space of the mechatronic system (20, 20'), said volumetric point cloud (25) comprising N points;
    attaching (32) a measuring device (21) to the mechatronic system (20, 20');
    fixing (33) M fiducial points (24) surrounding the mechatronic system (20, 20'), where M>3;
    defining (34) a common reference system for the mechatronic system (20, 20'), the measuring device (21) and the M fiducial points (24);
    the method being **characterized by**:

    sequentially moving the measuring device (21) to each of the N points of the volumetric point cloud (25) and, from each point in the volumetric point cloud (25), sequentially orienting the measuring device (21) to each of the M fiducial points (24) and, at each orientation, acquiring (36) a distance value ($D_{ij}$) from the current point to each of the M fiducial points (24), in such a way that the mechatronic system (20, 20') and therefore, the measuring device (21) is moved just once to each of the N points of the volumetric cloud (25);
    processing said N $\times$ M distance values $D_{ij}$ applying a multilateration approach (37) for obtaining (38) the actual coordinates of each of the N actual positions to which the measuring device (21) has been moved.

2.  The method of claim 1, where for each of the N $\times$ M distance values $D_{ij}$, wherein 1 < i < N and 1 < j < M, the following equation is obtained:

$$\left(Dij + L_{offset}\right)^2 = \left(P_{ix} - T_{jx}\right)^2 + \left(P_{iy} - T_{jy}\right)^2 + \left(P_{iz} - T_{jz}\right)^2$$

wherein:

$D_{ij}$ is a distance measurement taken from point i of the point cloud to fiducial point j,
$L_{offset}$ is an initial offset value,
$T_j$ is the position of fixed fiducial point j, and
$P_i$ is the position of point i of the point cloud.

3.  The method of either claim 1 or 2, wherein said measuring device (21) is a tracking interferometer or an absolute measurement system.

4. The method of claims 2 and 3, wherein the measuring system is an absolute measurement system, in which case the value of $L_{offset}$ = 0.

5. The method of any preceding claim, wherein said M fiducial points (24) are fixed at corners of a base (22) of the mechatronic system (20, 20').

6. The method of any preceding claim, wherein said mechatronic system (20, 20') performs multi-axis movement.

7. The method of any preceding claim, wherein said mechatronic system (20, 20') is a machine tool (20) or a robot (20').

8. The method of any preceding claim, wherein the stage of defining (34) a common reference system for the mechatronic system (20, 20'), the measuring device (21) and the M fiducial points (24), comprises using a second 3D measuring device.

9. A measuring system for determining the volumetric error of a mechatronic system (20, 20'), the measuring system comprising:

   means for defining a volumetric point cloud (25) depicting the volumetric work-space of the mechatronic system (20, 20'), said volumetric point cloud (25) comprising N points;
   a first measuring device (21) attachable to the mechatronic system (20, 20');
   a plurality of M fiducial points (24) surrounding the mechatronic system (20, 20'), wherein M>3;
   a second measuring device for defining a common reference system for the mechatronic system (20, 20'), the first measuring device (21) and the plurality of M fiducial points (24);
   the measuring system being **characterized in that** it further comprises:

   actuating means for sequentially moving the measuring device (21) to each of the N points of the volumetric point cloud (25) and, from each point in the volumetric point cloud (25), sequentially orienting the measuring device (21) to each of the M fiducial points (24) and, at each orientation, acquiring (36) a distance value ($D_{ij}$) from the current point to each of the M fiducial points (24), in such a way that the mechatronic system (20, 20') and therefore, the measuring device (21) is moved just once to each of the N points of the volumetric cloud (25);
   processing means for processing said N $\times$ M distance values $D_{ij}$ applying a multilateration approach (37) for obtaining (38) the actual coordinates of each of the N actual positions to which the measuring device (21) has been moved.

10. The measuring system of claim 9, wherein said plurality of M fiducial points (24) is fixed at corners of the base (22) of the mechatronic system (20, 20').

11. The measuring system of any preceding claim 9-10, wherein said mechatronic system (20, 20') is configured to perform multi-axis movement.

12. The measuring system of any preceding claim 9-11, wherein said measuring device (21) is a tracking interferometer or an absolute measurement system.

13. The measuring system of any preceding claim 9-12, wherein said actuating means are comprised in the mechatronic system (20, 20').

14. The measuring system of any preceding claim 9-13, wherein said mechatronic system (20, 20') is a machine tool (20) or a robot (20').

**Patentansprüche**

1. Verfahren zur Bestimmung des volumetrischen Fehlers eines mechatronischen Systems (20, 20'), umfassend:

   Definieren (31) einer volumetrischen Punktwolke (25), die den volumetrischen Arbeitsbereich des mechatronischen Systems (20, 20') abbildet, wobei die volumetrische Punktwolke (25) N Punkte umfasst;
Anbringen (32) einer Messvorrichtung (21) an das mechatronische System (20, 20');
Festlegen (33) von M Referenzpunkten (24), die das mechatronische System (20, 20') umgeben, wobei M>3;
Festlegen (34) eines gemeinsamen Referenzsystems für das mechatronische System (20, 20'), die Messvorrichtung (21) und die M-Referenzpunkte (24);
wobei das Verfahren **gekennzeichnet ist durch**:

> sequentielles Bewegen der Messvorrichtung (21) zu jedem der N Punkte der volumetrischen Punktwolke (25) und, ausgehend von jedem Punkt in der volumetrischen Punktwolke (25), sequentielles Ausrichten der Messvorrichtung (21) zu jedem der M Referenzpunkte (24) und, bei jeder Ausrichtung, Erfassen (36) eines Distanzwerts ($D_{ij}$) von dem aktuellen Punkt zu jedem der M Referenzpunkte (24), so dass das mechatronische System (20, 20') und somit die Messvorrichtung (21) nur einmal zu jedem der N Punkte der volumetrischen Wolke (25) bewegt wird;
> Verarbeiten der N $\times$ M Distanzwerte $D_{ij}$ unter Anwendung eines Multilaterationsansatzes (37), um die tatsächlichen Koordinaten jeder der N tatsächlichen Positionen zu erhalten (38), zu denen die Messvorrichtung (21) bewegt worden ist.

2. Verfahren nach Anspruch 1, wobei für jeden der N $\times$ M Distanzwerte $D_{ij}$, wobei 1 < i < N und 1 < j < M, die folgende Gleichung erhalten wird:

$$(Dij + L_{offset}) = (P_{ix} - T_{jx})^2 + (P_{iy} - T_{jy})^2 + (P_{iz} - T_{jz})^2$$

wobei:

> $D_{ij}$ eine Abstandsmessung vom Punkt i der Punktwolke zum Referenzpunkt j ist,
> $L_{offset}$ ein anfänglicher Versatzwert ist,
> $T_j$ die Position des festen Referenzpunkts j ist, und
> $P_i$ die Position von Punkt i in der Punktwolke ist.

3. Verfahren nach Anspruch 1 oder 2, wobei die Messvorrichtung (21) ein Tracking-Interferometer oder ein Absolutmesssystem ist.

4. Verfahren nach einem der Ansprüche 2 und 3, wobei das Messsystem ein Absolutmesssystem ist, wobei der Wert von $L_{offset}$= 0 ist.

5. Verfahren nach einem der vorhergehenden Ansprüche, wobei die M Referenzpunkte (24) an Ecken einer Basis (22) des mechatronischen Systems (20, 20') befestigt sind.

6. Verfahren nach einem der vorhergehenden Ansprüche, wobei das mechatronische System (20, 20') eine mehrachsige Bewegung ausführt.

7. Verfahren nach einem der vorhergehenden Ansprüche, wobei das mechatronische System (20, 20') eine Werkzeugmaschine (20) oder ein Roboter (20') ist.

8. Verfahren nach einem der vorhergehenden Ansprüche, wobei der Schritt des Definierens (34) eines gemeinsamen Referenzsystems für das mechatronische System (20, 20'), die Messvorrichtung (21) und die M-Referenzpunkte (24) das Verwenden einer zweiten 3D-Messvorrichtung umfasst.

9. Messsystem zur Bestimmung des volumetrischen Fehlers eines mechatronischen Systems (20, 20'), wobei das Messsystem umfasst:

> Mittel zum Definieren einer volumetrischen Punktwolke (25), die den volumetrischen Arbeitsbereich des mechatronischen Systems (20, 20') abbildet, wobei die volumetrische Punktwolke (25) N Punkte umfasst;
> eine erste Messvorrichtung (21), die an dem mechatronischen System (20, 20') anbringbar ist;
> eine Vielzahl von M Referenzpunkten (24), die das mechatronische System (20, 20') umgeben, wobei M>3;
> eine zweite Messvorrichtung zur Festlegung eines gemeinsamen Referenzsystems für das mechatronische System (20, 20'), die erste Messvorrichtung (21) und die mehreren M-Referenzpunkte (24);

wobei das Messsystem **dadurch gekennzeichnet ist, dass** es außerdem umfasst:

Betätigungsmittel zum sequentiellen Bewegen der Messvorrichtung (21) zu jedem der N Punkte der volumetrischen Punktwolke (25) und zum, von jedem Punkt in der volumetrischen Punktwolke (25) aus, sequentiellen Ausrichten der Messvorrichtung (21) zu jedem der M Referenzpunkte (24) und, bei jeder Ausrichtung, zum Erfassen (36) eines Distanzwerts ($D_{ij}$) von dem aktuellen Punkt zu jedem der M Referenzpunkte (24), derart, dass das mechatronische System (20, 20') und damit die Messvorrichtung (21) nur einmal zu jedem der N Punkte der volumetrischen Wolke (25) bewegt wird;
Verarbeitungsmittel zum Verarbeiten der N × M Distanzwerte $D_{ij}$ unter Anwendung eines Multilaterationsansatzes (37), um die tatsächlichen Koordinaten jeder der N tatsächlichen Positionen zu erhalten (38), zu denen die Messvorrichtung (21) bewegt worden ist.

10. Messsystem nach Anspruch 9, wobei die Vielzahl von M Referenzpunkten (24) an Ecken der Basis (22) des mechatronischen Systems (20, 20') befestigt ist.

11. Messsystem nach einem der vorhergehenden Ansprüche 9-10, wobei das mechatronische System (20, 20') eingerichtet ist, eine mehrachsige Bewegung auszuführen.

12. Messsystem nach einem der vorhergehenden Ansprüche 9-11, wobei die Messvorrichtung (21) ein Tracking-Interferometer oder ein Absolutmesssystem ist.

13. Messsystem nach einem der vorhergehenden Ansprüche 9-12, wobei die Betätigungsmittel von dem mechatronischen System (20, 20') umfasst sind.

14. Messsystem nach einem der vorhergehenden Ansprüche 9-13, wobei das mechatronische System (20, 20') eine Werkzeugmaschine (20) oder ein Roboter (20') ist.

**Revendications**

1. Méthode pour la détermination de l'erreur volumétrique d'un système mécatronique (20, 20'), comprenant :

la définition (31) d'un nuage de points volumétrique (25) représentant l'espace de travail volumétrique du système mécatronique (20, 20'), ledit nuage de points volumétrique (25) comprenant N points ;
l'association (32) d'un dispositif de mesure (21) au système mécatronique (20, 20') ;
la fixation (33) de M points de référence (24) autour du système mécatronique (20, 20'), où M > 3 ;
la définition (34) d'un système de référence commun pour le système mécatronique (20, 20'), le dispositif de mesure (21) et les M points de référence (24) ;
la méthode étant **caractérisée par** :

le déplacement en séquence du dispositif de mesure (21) vers chacun des N points du nuage de points volumétrique (25) et, à partir de chaque point dans le nuage de points volumétrique (25), l'orientation en séquence du dispositif de mesure (21) vers chacun des M points de référence (24) et, à chaque orientation, l'acquisition (36) d'une valeur de distance ($D_{ij}$), du point actuel à chacun des M points de référence (24), d'une manière telle que le système mécatronique (20, 20'), et par conséquent le dispositif de mesure (21), soit déplacé juste une fois vers chacun des N points du nuage volumétrique (25) ;
le traitement desdites N × M valeurs de distance $D_{ij}$ en appliquant une approche de multilatération (37) pour l'obtention (38) des coordonnées réelles de chacune des N positions réelles vers lesquelles le dispositif de mesure (21) a été déplacé.

2. Méthode selon la revendication 1, où pour chacune des N × M valeurs de distance $D_{ij}$, dans laquelle 1 < i < N et 1 < j < M, l'équation suivante est obtenue :

$$(D_{ij} + L_{offset})^2 = (P_{ix} - T_{jx})^2 + (P_{iy} - T_{jy})^2 + (P_{iz} - T_{jz})^2$$

dans laquelle :

$D_{ij}$ est une mesure de distance, prise du point i du nuage de points au point de référence j,

$L_{offset}$ est une valeur de décalage initiale,

$T_j$ est la position du point de référence fixe j, et

$P_i$ est la position du point i du nuage de points.

3. Méthode selon l'une ou l'autre de la revendication 1 ou 2, dans laquelle ledit dispositif de mesure (21) est un interféromètre de poursuite ou un système de mesure absolue.

4. Méthode selon les revendications 2 et 3, dans laquelle le système de mesure est un système de mesure absolue, auquel cas la valeur de $L_{offset}$ = 0.

5. Méthode selon une quelconque revendication précédente, dans laquelle lesdits M points de référence (24) sont fixés aux coins d'une base (22) du système mécatronique (20, 20').

6. Méthode selon une quelconque revendication précédente, dans laquelle ledit système mécatronique (20, 20') réalise un mouvement multiaxial.

7. Méthode selon une quelconque revendication précédente, dans laquelle ledit système mécatronique (20, 20') est une machine-outil (20) ou un robot (20').

8. Méthode selon une quelconque revendication précédente, dans laquelle l'étape de définition (34) d'un système de référence commun pour le système mécatronique (20, 20'), le dispositif de mesure (21) et les M points de référence (24), comprend l'utilisation d'un second dispositif de mesure en 3D.

9. Système de mesure pour la détermination de l'erreur volumétrique d'un système mécatronique (20, 20'), le système de mesure comprenant :

des moyens pour définir un nuage de points volumétrique (25) représentant l'espace de travail volumétrique du système mécatronique (20, 20'), ledit nuage de points volumétrique (25) comprenant N points ;
un premier dispositif de mesure (21) apte à être associé au système mécatronique (20, 20') ;
une pluralité de M points de référence (24) autour du système mécatronique (20, 20'), dans laquelle M > 3 ;
un second dispositif de mesure pour définir un système de référence commun pour le système mécatronique (20, 20'), le premier dispositif de mesure (21) et la pluralité de M points de référence (24) ;
le système de mesure étant **caractérisé en ce qu'**il comprend en outre :

des moyens d'actionnement pour déplacer en séquence le dispositif de mesure (21) vers chacun des N points du nuage de points volumétrique (25) et, à partir de chaque point dans le nuage de points volumétrique (25), orienter en séquence le dispositif de mesure (21) vers chacun des M points de référence (24) et, à chaque orientation, acquérir (36) une valeur de distance ($D_{ij}$), du point actuel à chacun des M points de référence (24), d'une manière telle que le système mécatronique (20, 20'), et par conséquent le dispositif de mesure (21), soit déplacé juste une fois vers chacun des N points du nuage volumétrique (25) ;
des moyens de traitement pour traiter lesdites N $\times$ M valeurs de distance $D_{ij}$ en appliquant une approche de multilatération (37) pour l'obtention (38) des coordonnées réelles de chacune des N positions réelles vers lesquelles le dispositif de mesure (21) a été déplacé.

10. Système de mesure selon la revendication 9, dans lequel ladite pluralité de M points de référence (24) est fixée aux coins de la base (22) du système mécatronique (20, 20').

11. Système de mesure selon une quelconque revendication 9 à 10 précédente, dans lequel ledit système mécatronique (20, 20') est configuré pour réaliser un mouvement multiaxial.

12. Système de mesure selon une quelconque revendication 9 à 11 précédente, dans lequel ledit dispositif de mesure (21) est un interféromètre de poursuite ou un système de mesure absolue.

13. Système de mesure selon une quelconque revendication 9 à 12 précédente, dans lequel lesdits moyens d'actionnement sont compris dans le système mécatronique (20, 20').

14. Système de mesure selon une quelconque revendication 9 à 13 précédente, dans lequel ledit système mécatronique (20, 20') est une machine-outil (20) ou un robot (20').

**FIG. 1**
(PRIOR ART)

**FIG. 2A**

**FIG. 2B**

FIG. 3

EP 3 745 223 B1

**FIG. 4**

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8659763 B2
- DE 10126753 A1
- DE 19947374 B4

- EP 1658471 B1
- US 20140355002 A1

### Non-patent literature cited in the description

- **URIARTE L. et al.** *Machine tools for large parts. CIRP Ann. - Manuf. Technol.,* 2013, vol. 62, 731-750
- **MUTILBA, U. et al.** Traceability of On-Machine Tool Measurement: A Review. *MDPI Sensors,* 2017, vol. 17, 40
- **SCHWENKE, H. et al.** On-the-fly calibration of linear and rotary axes of machine tools and CMMs using a tracking interferometer. *CIRP Ann. - Manuf. Technol.,* 2009, vol. 58, 477-480
- **SCHWENKE, H. et al.** Error mapping of CMMs and machine tools by a single tracking interferometer. *CIRP Ann. - Manuf. Technol.,* 2005, vol. 54, 475-478

- **SCHWENKE H. et al.** Error mapping of CMMs and machine tools by a single tracking interferometer. *CIRP Ann. - Manuf. Technol.,* 2005, vol. 54, 475-478
- **OLARRA et al.** *Measuring positioning accuracy of large machine tools,* 2012
- **SCHWENKE et al.** On-the-fly calibration of linear and rotary axes of machine tools and CMMs using a tracking interferometer. *CIRP Ann. - Manuf. Technol.,* 2009, vol. 58, 477-480